# EUROPEAN PATENT APPLICATION

(11) **EP 1 729 230 A1**
(43) Date of publication of application: **06.12.2006**
(21) Application number: 06252621.5
(22) Date of filing: 19.05.2006
(51) Int. Cl.: G06F 17/30

(54) **Photograph with map**

(30) Priority: 02.06.2005 US 143868
(71) Applicant: Navteq North America, LLC, Chicago IL 60654 (US)
(72) Inventor: Bennett, James Ronald, San Jose California 95125 (US)
(74) Representative: Palmer, Jonathan R.

(57) **Abstract**

A feature for producing photographs is disclosed. A location is associated with an image. When a photograph of the image is printed, a map showing the location is printed on the back side of the photograph.

## Description

### BACKGROUND OF THE INVENTION

The present invention relates to a feature for a producing a photograph that prints a map of a location associated with the photograph on the back side of the photograph.

Improvements in photography have enabled various kinds of information to be associated with pictures. For example, a time and/or date stamp can be associated with a photograph. The time or date stamp may appear on the actual print of the photograph image or may be associated with a data file of the photograph image. Other improvements allow users to add labels or text to photos. These labels or text may appear in the actual print of the photograph image or may be associated with the data file of the photograph image. Another improvement allows location data to be associated with photographs. The location data may indicate where a photograph was taken. The location where a photograph was taken may be determined using positioning equipment, such as a GPS unit. This type of information is very useful. However there exists room for improvements.

Accordingly, it is an objective to provide a way to indicate a location associated with a photograph that is meaningful to the user.

### SUMMARY OF THE INVENTION

To address these and other objectives, the present invention includes a feature for producing photographs. A location is associated with an image. When a photograph of the image is printed, a map showing the associated location is printed on the back side of the photograph.

### BRIEF DESCRIPTION OF THE DRAWINGS

Figure 1 is a block diagram showing a system for producing a photograph according to a first embodiment.
Figure 2 is a flow chart showing a process performed by the embodiment of Figure 1.
Figure 3 is an illustration of a front side of a photograph produced by the process of Figure 2.
Figure 4 is an illustration of a back side of the photograph shown in Figure 3.
Figure 5 is a block diagram showing another embodiment of a system for producing a photograph.

### DETAILED DESCRIPTION OF THE

### PRESENTLY PREFERRED EMBODIMENTS

### I. FIRST EMBODIMENT

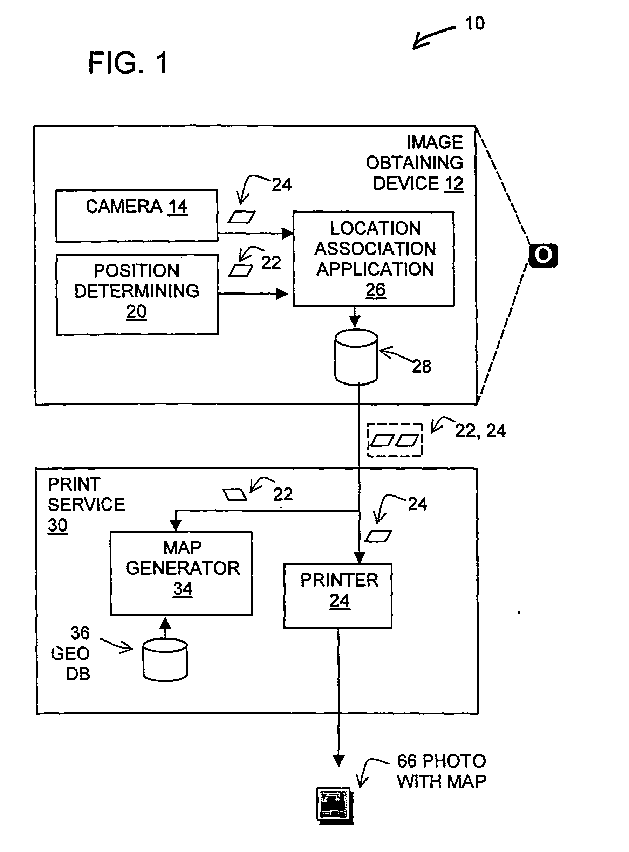

Figure 1 is a block diagram showing components of a system 10 that incorporates a first disclosed embodiment. The system 10 includes an image-obtaining device 12. The image-obtaining device 12 includes a camera component 14 or other item of equipment that incorporates a camera or similar technology. The image-obtaining device 12 is operable by a human operator and may include a suitable user interface. Examples of image-obtaining devices include cameras (digital or film), mobile phones with built-in cameras, video recorders, web cams, etc. The image-obtaining device 12 uses any current or future technology for acquiring and saving visual images (or data versions thereof) of observable views on a media. The image-obtaining device 12 may acquire and save the visual images in analog or digital form. If digital form is used, any suitable format, such as *.jpg, *.bmp, or *.png, may be used. Other formats may also be used. The media on which the visual images (or data versions thereof) are stored may include flash cards, film, disks, memories, and so forth.

The image-obtaining device 12 includes a component 20 that determines the position of the image-obtaining device 12. In one embodiment, the position-determining component 20 is a GPS unit. Alternatively, the position-determining component 20 is implemented using other technology. Such alternatives include DGPS, LORAN, inertial sensors, RFIDs, signal reception technology (i.e., whereby the location of a device such as a mobile phone can be determined remotely using signal triangulation, signal time-of-arrival, direction-of-arrival, etc.) and so on. In yet another alternative, the position-determining unit is an external unit to which the camera component is temporarily or permanent connected, such as a PDA with a GPS unit. Alternatively, the position-determining component 20 may include a user interface through which an operator of the image-obtaining device 12 may specify or input a location. Combinations of different technologies may also be used. The position-determining component 20 may use (or rely on) equipment or components located outside the image-obtaining device 12. For example, in the case of a GPS unit, the position-determining component 20 relies on signals from GPS satellites.

In this embodiment, when the image-obtaining device 12 is operated to acquire an image, data 22 indicating the location of the image-obtaining device 12 is obtained from the position-determining component 20. In the present embodiment, the data 22 indicating the location of the image-obtaining device 12 is obtained at the same time that the image is acquired. The data 22 indicating the position of the image-obtaining device 12 is associated with the acquired image. A suitable application 26 is used for this purpose. Data 24 corresponding to the acquired image and associated data 22 indicating the position of the image-obtaining device 12 are stored on a suitable storage medium 28 in the image-obtaining device 12. If the acquired image is stored as a data file, the data 22 indicating the position of the image-obtaining device 12 may be stored in the same data file on the same data storage medium 28 in the image-obtaining device. Alternatively, the data indicating the position of the image-obtaining device 12 may be stored in another data file and/or on a separate medium.

The image-obtaining device 12 may also acquire additional information about the image, such as the date and/or time that the image was taken. If the image-obtaining device acquires such information, this information is also associated and stored with the image.

When the operator of the image-obtaining device 12 wishes to obtain a printed copy of an image, the data 24 corresponding to the image, as well as the data 22 indicating the position of the image-obtaining device, is transmitted from the image-obtaining device to a print service 30. (The information about the date and time, if available, may also be transmitted.) The print service 30 may be implemented in various different ways. In one alternative, the print service 30 is an online service. In this implementation, the print service 30 is not physically located with the operator of the image-obtaining device 12. The print service 30 includes the hardware and software necessary to send and receive information over a data network. According to this alternative, the operator of the image-obtaining device 12 transmits the data 24 corresponding to the image for which a physical printed copy is desired to the online print service. The print service 30 uses its own equipment that is capable of making a physical printed copy of the image for which the physical printed copy is desired. The online print service 30 sends the physical printed copy of the desired image to the operator by mail (or any other suitable delivery service) or otherwise makes the physical printed copy of the desired image available to the operator.

According to this embodiment, the print service 30 includes a geographic database 36 and a map generating application 34. The geographic database 36 is stored on suitable media, such as one or more hard disks or other suitable data storage device(s). The geographic database 36 includes information about roads or other features in a geographic region. For example, the geographic database 36 includes information about the positions of roads and intersections, the names of roads, etc. The geographic database 36 may also include information about address ranges, the locations of boundaries of administrative or governmental areas or places, such as municipalities, including cities, towns, villages, parks, recreational areas, golf courses, etc, information about points of interest, buildings, bodies of water, and so on. The map generating application 34 is a software application capable of receiving a specification of a location and then rendering a graphical image of a map of an area that encompasses the specified location. The map generating application 34 may be capable of generating map images at different levels of detail or scales. The print service 30 may provide an application that allows the user to specify a desired level of detail or scale of the map to be printed on the back side of the photograph.

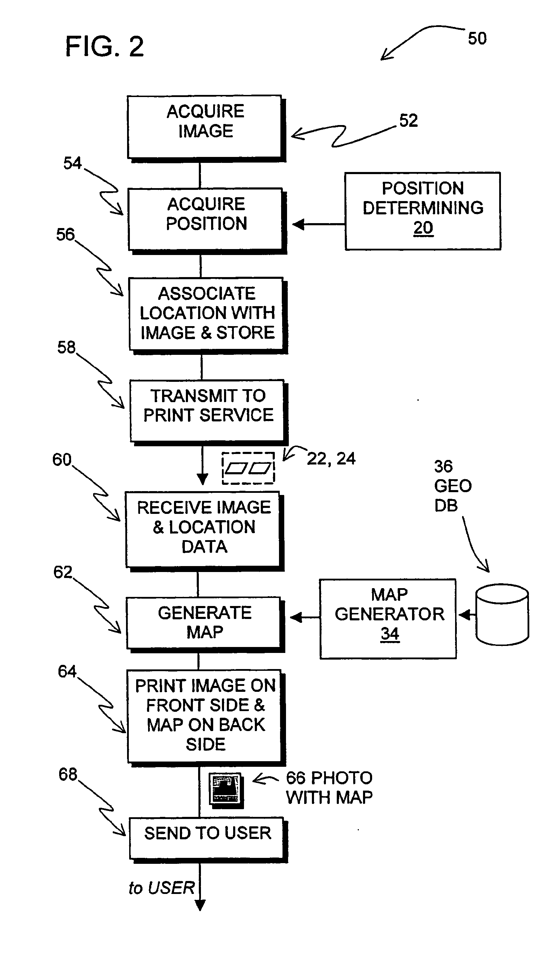

Figure 2 shows a process 50 performed by the system 10 of Figure 1.

The image-obtaining device 12 is used to acquire an image (Step 52). When the image-obtaining device 12 is used to acquire an image, the position of the image-obtaining device is acquired (Step 54). Data indicating the position is associated with data representing the image and stored temporarily in the image-obtaining device 12 (Step 56).

When the user of the image-obtaining device 12 wishes to obtain a physical copy of the image (i.e., a photograph), the user operates the image-obtaining device 12 to transmit the data 24 representing the image and the associated data 22 indicating the position to the print service (Step 58). As mentioned above, if the print service 30 is an online service, the user operates the image-obtaining device 12 to transfer the data files from the image-obtaining device 12 to the online print service. The file may be transferred directly or alternatively, the data files may be transferred first to a personal computer or other equipment and then transferred to the online print service.

The print service 30 receives the data 24 representing the image and the associated data 22 indicating the position (Step 60). The print service 30 uses the data 22 indicating the position to generate a map of the area corresponding to the position (Step 62). The print service 30 may use the map generating application (34 in Figure 1) for this purpose. The map generated by the map generating application may show the streets around the location associated with the image, the names of the streets, the locations of points of interest or buildings (or building footprints) in the area shown in the map, the name of the municipality, state and/or country in which the image was taken, bodies of water, and other information or features. When generating the map, the map generating application 34 may use a default scale and level of detail or may use a scale or level of detail specified by the user. Then, a physical photograph 66 is printed on a piece of paper with the image printed on one side (e.g., the front side) of the piece of paper and the map printed on the other side (e.g., the back side) of the piece of paper (Step 64). The photograph with the map is then sent to the user (Step 68).

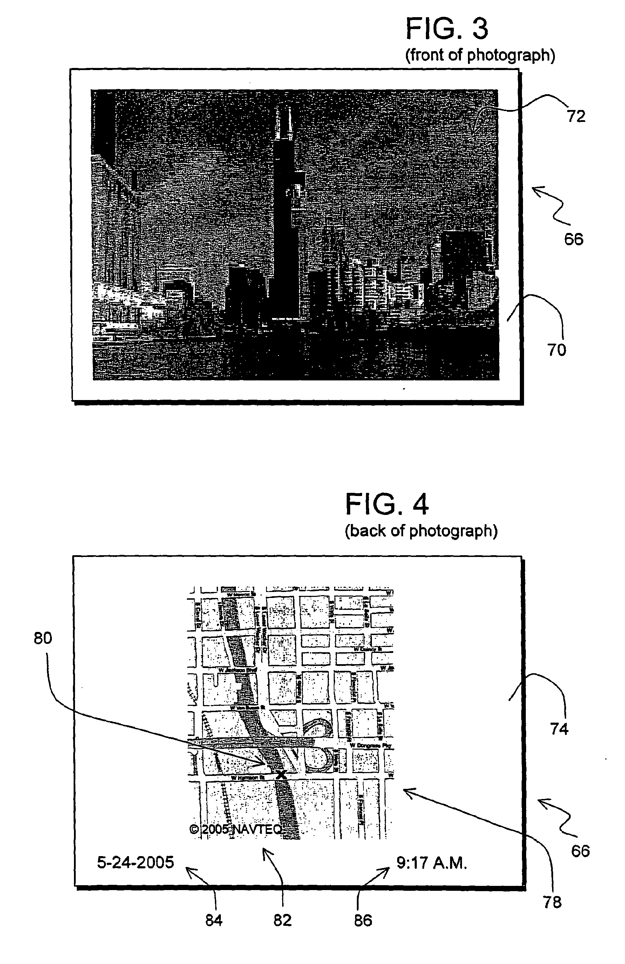

Figures 3 and 4 show an example of the photograph 66 with a map produced by the process of Figure 2. Figure 3 shows a front side 70 of the photograph 66 with the image 72 produced from the data file 24 printed thereon. Figure 4 shows a back side 74 of the photograph 66 with a map 78 generated by the map application 34 showing an area that encompasses the location associated with the image printed thereon. The map 78 may include an indication or marker 80 of the location associated with the image. A copyright notice 82 may be included with the map, if appropriate. The date 84 and time 86 associated with the image may also be printed on the back side 74 of the photograph 66.

The process 50 may also allow user-provided text to be included on the back side of the photograph. For example, the user may wish to indicate the name of a feature depicted in the photograph.

### II. ALTERNATIVE EMBODIMENTS

### A. User specified location alternative

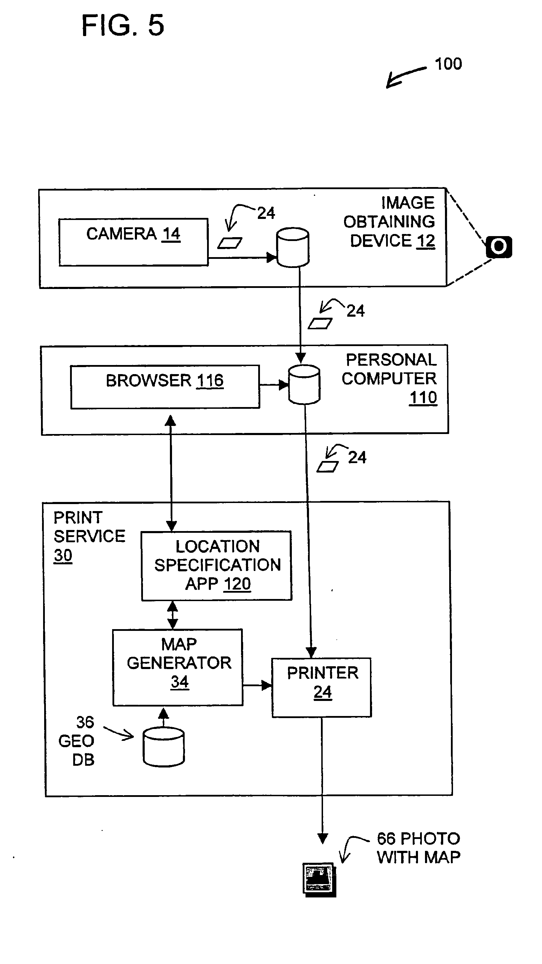

Figure 5 shows another embodiment 100 of a system for producing a photograph with a map on the back side. Some of the components of the system 100 shown in Figure 5 are similar to components of the system 10 in Figure 1 and like components are indicated by the same numbers.

In Figure 5, an image-obtaining device 12 does not have a position determining system included therein. In Figure 5, when the user wishes to obtain a printed copy of an image taken using the image-obtaining device, the image-obtaining device 12 is coupled to a personal computer 110. The personal computer 110 is coupled to a data network, such as the Internet. The user operates the personal computer 110 to access the web site of the print service 30. A browser 116 or other similar application may be used for this purpose. The print service 30 runs a location specification application 120 that can be accessed by the user. The location specification application 120 accepts a specification by the user of a location to be associated with an image sent by the user to the print service 30 for printing. The location specification application 120 may allow the user to specify the location by various different means, such as by street address, geographic coordinates, place name, and so on. The location specification application may also allow the user to specify the location by indicating the location on a map.

The location specification application 120 may also allow the user to indicate the scale and/or level of detail to be included in the map to be printed on the back side of the photograph. The location specification application 120 may provide the user with a preview showing the map to be printed on the back side of the photograph.

Once the user uses the location specification application 120 to indicate the location to be associated with an image to be printed, the print service 30 prints a physical copy of the photograph with a map image on the back side, as described in the previous embodiment.

### B. Local printer alternatives.

In one alternative embodiment, the photograph with the map printed on the back side is produced using a local printer, i.e., a printer physically located with the user of the image-obtaining device. In this alternative embodiment, the local printer includes the ability to print a map on the back side of a photograph.

In this embodiment, the image-obtaining device may connect directly to the local printer. Alternatively, the image-obtaining device may be connected to the printer through a personal computer. The local printer may be connected to the personal computer through a local network.

In this alternative, the map generating application may be located in the local printer, in a local personal computer, or in the image-obtaining device.

The connections between the various components may be implemented by any suitable technology, including physical cables or wireless connections.

### C. Map generating application and geographic database alternatives

In the first embodiment described above, the geographic database was described as being located with the map generating application at the online printer service. In alternative embodiments in which the map generating application is not located at an online printer service, the geographic database may be located with the map generating application. For example, if the map generating application is located in a local printer, the geographic database also may be located in the local printer. Alternatively, if the map generating application is located in a local personal computer, the geographic database also may be located in the local personal computer. Likewise, if the map generating application is located in the image-obtaining device, the geographic database also may be located in the image-obtaining device.

In alternative embodiments, the geographic database is not necessarily located with the map generating application. For example, the map generating application may be located in a local printer while the geographic database may be located on a personal computer. In another example, the map generating application may be located in a local personal computer while the geographic database may be located on a remote server. Various other combinations may be used.

### D. Location of photograph alternatives

In the first embodiment, it was described that the data indicating the location to be associated with an image was obtained at the same time as the image. In alternative embodiments, the data indicating the location to be associated with an image may be obtained at a time close to the time that the image was obtained. For example, the data indicating the location to be associated with an image may be obtained several seconds or minutes before or after the time the image was obtained.

In the first embodiment, it was described that the data indicating the location to be associated with an image corresponded to the location of the image-obtaining device. In an alternative, the location to be associated with an image may correspond to the location of a feature depicted in the image obtained by the image-obtaining device. For example, if an image is taken of a building from a vantage point 1/2 kilometer away from the building, the location associated with the image may be the location of the building in the image instead of the location of the image-obtaining device. Alternatively, data may be associated with an image that includes both the location of the image-obtaining device and the location of a feature depicted in the image. The location of a feature depicted in an image may be specified by the user of the image-obtaining device. An appropriate user interface and application in the image-obtaining device or provided by the printer service may be used for this purpose. Alternatively, the location of a feature depicted in an image may be obtained by remote sensing equipment associated with the image-obtaining device. For example, the remote sensing equipment may use radar, light or sound wave reflection, focusing, etc., to determine a distance to a feature or object in an image from which the location of the feature or object can be determined.

In one of the above disclosed embodiments, it was described that a marker indicating the location of the camera can be superimposed on the map printed on the back side of the photograph. In another alternative, the orientation or bearing of the camera may be superimposed on the map printed on the back side of the photograph. The orientation or bearing may be indicated by an arrow or other means. The orientation of the camera may be determined by equipment associated with the camera, such as a compass. Alternatively, the orientation may be provided by the camera operator via a suitable user interface.

It is intended that the foregoing detailed description be regarded as illustrative rather than limiting and that it is understood that the following claims including all equivalents are intended to define the scope of the invention.

## Claims

1. A method for producing a photograph comprising:
acquiring information that indicates a location associated with an image; and
printing the image on a front side of a piece of paper and a map of the location on a back side of the piece of paper.

2. The method of Claim 1 further comprising:
using a position determining unit associated with a camera used to obtain the image to determine a position of the camera when the image is taken.

3. The method of Claim 2 wherein the location associated with the image corresponds to the position of the camera when the image is taken.

4. The method of Claim 2 wherein the position determining unit includes a GPS unit.

5. The method of Claim 1 wherein the position is expressed as geographic coordinates.

6. The method of Claim 1 further comprising:
using a geographic database to determine the map.

7. The method of Claim 1 wherein the geographic database is located at a remotely located print service.

8. The method of Claim 1 further comprising:
printing a date and time on the back side of the piece of paper.

9. The method of Claim 1 further comprising:
receiving an indication of a level of detail to include in the map, wherein the map is printed with the specified level of detail.

10. The method of Claim 1 wherein the step of printing is performed by an online printing service.

11. The method of Claim 1 wherein the step of printing is performed by a local printer.

12. The method of Claim 1 further comprising:
obtaining the information that indicates the location associated with the image from a user.

13. The method of Claim 1 wherein the map is printed at a default scale.

14. A photograph produced by the method of Claim 1.

15. A photograph comprising:
a piece of paper having a front side and a back side;
an image printed on the front side; and
a map printed on the back side, wherein the map shows a location associated with the image.

16. The photograph of Claim 15 further comprising:
a date and time printed on the back side of the piece of paper.

17. The photograph of Claim 15 wherein the map is at a scale specified by a user.

18. The photograph of Claim 15 wherein the map is at a default scale.

19. An online method for producing photographs comprising:
from each of a plurality of users, receiving data corresponding to an image and information that indicates a location associated with the image;
printing the image on a front side of a piece of paper and a map of the location on a back side of the piece of paper; and
providing the piece of paper to the user from whom the image was received.

20. A printer comprising:
means for receiving data corresponding to an image;
means for receiving data that indicates a location associated with the image;
means for printing the image on a front side of a piece of paper and a map of the location on a back side of the piece of paper.

21. The printer of Claim 20 further comprising:
a map generating means for generating a map that encompasses the location, said map generating means operatively coupled to the means for receiving data that indicates a location associated with the image; and
a geographic database operatively coupled to the map generating means.
